# EUROPEAN PATENT APPLICATION

(11) **EP 2 930 615 A1**
(43) Date of publication of application: **14.10.2015**
(21) Application number: 15158407.5
(22) Date of filing: 10.03.2015
(51) Int. Cl.: G06F 9/445, G05B 19/418

(54) **INDUSTRIAL AUTOMATION SYSTEM WEB APPLICATION PERFORMANCE ENHANCEMENT SYSTEM AND METHOD**

(30) Priority: 13.03.2014 US 201414209595
(71) Applicant: Rockwell Automation Technologies, Inc., Milwaukee, Wisconsin 53204 (US)
(72) Inventor: Liberman, Eugene M., Rocky River, OH Ohio 44116 (US)
(74) Representative: Grünecker Patent- und Rechtsanwälte PartG mbB

(57) **Abstract**

System and method for enhancing the performance of an industrial automation system web application are disclosed. The industrial automation system web application may access a plurality of generated server-client application pairs with a range of varying capabilities. The plurality of server-client application pairs may be loaded to a serving device or external source. At the start of the industrial automation system web application and/or when client device make requests to the serving device, the capabilities (e.g., resources) of the serving device and requesting client device may be determined and a server-client application pair may be selected and deployed that reflects the determined capabilities. Additionally, if the capabilities of the serving device and/or client device change during runtime, the web application may detect the change and select and deploy a different server-client application pair accordingly.

## Description

### BACKGROUND

The present disclosure relates generally to the field of industrial automation control systems. More particularly, embodiments of the present disclosure relate to enhancing the performance of industrial automation system web applications.

Web applications are the new norm for delivering content and functionalities to users. In particular, web browsers, the "thin clients," are becoming a standard way to provide user interface to various computer applications. For example, a web browser may be utilized to remotely access computer programs running on an automation controller or human machine interface connected to a machine or process. These web browsers run on client devices ranging from powerful desktop computers to small cell phones with limited computing resources such as memory (RAM), CPU speed, and non-volatile storage like disk drives, flash memory, and so forth. Likewise, the servers that deliver the application to the browsers range from large server farms to a small ARM processor, for example. Generally, web applications contain two major components: the server side application and the client side application. The web applications utilized in the industrial automation context may deploy a server side application and a client side application when the web applications are first started regardless of the type and capabilities of the servers and client devices. Further, the capabilities of the servers and client devices may change during runtime and the server side application and client side application may remain deployed. Thus, the performance of the industrial automation system web applications may be hindered.

### BRIEF DESCRIPTION

Certain embodiments commensurate in scope with the originally claimed invention are summarized below. These embodiments are intended only to provide a brief summary of possible forms of the invention. Indeed, the invention may encompass a variety of forms that may be similar to or different from the embodiments set forth below.

In one embodiment, an industrial automation system includes a serving device including a processor, a memory, and a communication component wherein the serving device stores in the memory a plurality of pairs of server side applications and client side applications accessed by the web application, the pairs of server side applications and client side applications permitting, together, performance of an industrial automation task, and a web application that is, in operation, run via the processor on the serving device, and is configured to, when a request is made from a client device via the communication component and while the web application is running, determine capabilities of the serving device and of the client device, select a server side application to deploy on the serving device and client side application to deliver to the client device from the pairs of stored applications based upon the determined capabilities of the serving device and the client device.

In another embodiment, a non-transitory computer-readable medium storing computer instructions, the computer instructions configured to access a plurality of pairs of server side applications and client side applications for use in an industrial automation system, wherein the pairs are configured so that the capabilities of the server side applications and client side applications are different and the pairs create a range from the server side application having relatively more capabilities when the associated client side application has relatively less capabilities, to the server side application having relatively less capabilities when the associated client side application has relatively more capabilities. The computer instructions are also configured to load the pairs to a serving device, determine the capabilities of the serving device and client device that makes requests to the serving device, select the pair of server side application to deploy and client side application to deliver based upon the determination of capabilities of the serving device and the client device, and deploy the selected pair, wherein the selected server side application is deployed on the serving device and the associated client side application is delivered to the client device.

In yet another embodiment, a method for an industrial automation system includes accessing, via an industrial automation system web application, a plurality of pairs of server side applications and client side applications for use in the industrial automation system web application, wherein the pairs create a range from the server side application having relatively more capabilities when the associated client side application has relatively less capabilities, to the server side application having relatively less capabilities when the associated client side application has relatively more capabilities, loading the pairs to a serving device that is configured to run the industrial automation system web application, determining, via the industrial automation system web application, the capabilities of the serving device and a client device that make requests to the serving device, selecting, via the industrial automation system web application, the pair of server side application and client side application based upon the determination of capabilities of the serving device and the client device, and deploying the selected pair, wherein the server side application is deployed on the serving device and the client side application is delivered to the client device.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of an industrial automation system including networked components and configuration equipment in accordance with embodiments of the present techniques;
FIG. 2 is a diagrammatical representation of server-client application pairs utilized by an industrial automation system web application with one or more serving device and one or more client device in an industrial automation system in accordance with embodiments of the present techniques;
FIG. 3 is a block diagram of exemplary logic of a method for generating, loading, selecting, and deploying server-client application pairs using an industrial automation system web application in accordance with embodiments of the present techniques; and
FIG. 4 is a sequence diagram of exemplary logic for generating, loading, selecting, and deploying server-client application pairs using an industrial automation system web application in accordance with embodiments of the present techniques.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. It should be noted that the terms "server" and "serving device" may be used interchangeably herein. Further, the terms "client" and "client device" may be used interchangeably herein.

Present embodiments relate to a system and method for increasing the performance of an industrial automation system web application through the use of server and client application pairs. In certain embodiments, the industrial automation system web application may generate a plurality of pairs of server applications and associated client applications with varying degrees of capabilities. In other embodiments, the pairs may be generated by another program and be delivered as part of an industrial automation system web application package. The plurality of pairs may create a range of capabilities from the server side application having more capabilities than the associated client side application (e.g., the server does as much of the processing as possible and the client does as little processing as possible) to the server side application having less capabilities than the associated client side application (e.g., the server does as little processing as possible and the client does as much processing as possible). There may be other combinations of server-client application pairs with different levels of capabilities throughout the range, as well. The pairs of server side applications and client side applications may permit, together, performance of an industrial automation task.

In some embodiments, these server-client application pairs may be loaded onto the one or more serving devices' memory by the industrial automation system web application. When the industrial automation system web application is first started or when the one or more client devices makes a request to the serving device, the web application may determine the capabilities (e.g., CPU, memory, network bandwidth, etc.) of the one or more serving devices and the one or more client devices making requests to the serving devices. The industrial automation system web application may select a client-server application pair that most closely matches the determined capabilities of the serving device and client device in order to increase system performance. Then, the server side application that is chosen may be accessed and deployed on the one or more serving devices and the client side application may be accessed and delivered to the one or more client devices. Further, in certain embodiments, the industrial automation system web application may monitor the capabilities of the serving device and the client device and may choose a different server-client application pair when a change in capabilities is detected. The newly selected pair may be deployed seamlessly during runtime and performance can be dynamically enhanced. While the serving and client devices are often referred to in the singular in this discussion, it should be noted that one or both may comprise multiple serving and client devices, respectively.

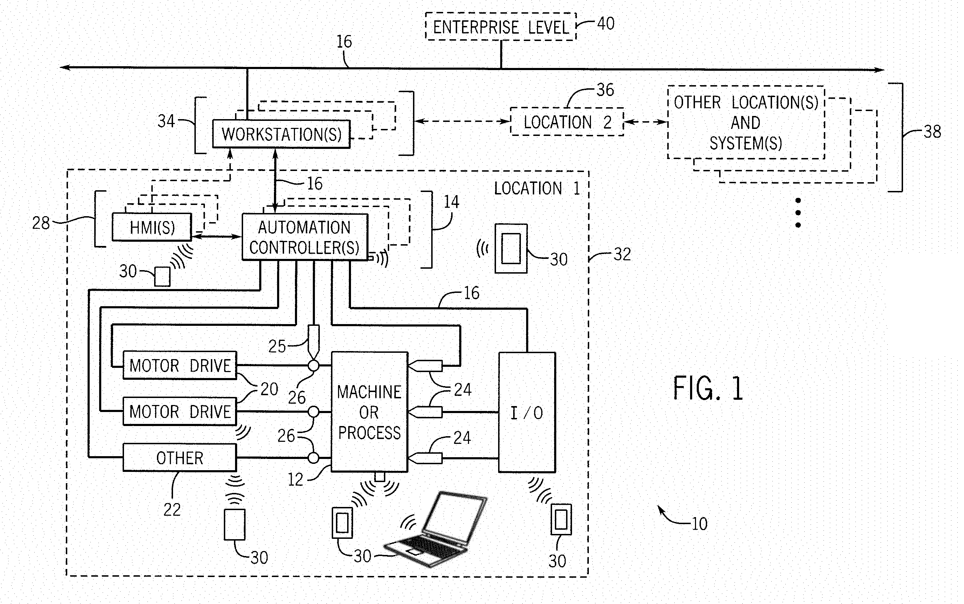

Turning now to FIG. 1, which is a diagrammatical representation of an industrial automation system including networked components and configuration equipment in accordance with embodiments of the present techniques. The industrial automation system is generally indicated by reference numeral 10. Specifically, the automation system 10 is illustrated as including a machine system or process 12 and one or more automation controllers 14 adapted to interface through a network 16 with an input/output (I/O) device 18. It should be noted that such an interface in accordance with embodiments of the present techniques may be facilitated by the use of certain network strategies. Indeed, an industry standard network may be employed, such as DeviceNet, to enable data transfer. Such networks permit the exchange of data in accordance with a predefined protocol, and may provide power for operation of networked elements.

The machine system or process 12 may take many forms and include devices for accomplishing many different and varied purposes. For example, the machine system or process 12 may include a compressor station, an oil refinery, a batch operation for making food items, a mechanized assembly line, and so forth. Accordingly, the machine system or process 12 may include a variety of operational components, such as motor drives 20, electric motors, valves, actuators, temperature elements, pressure sensors, or a myriad of manufacturing, processing, material handling, and other applications 22. Further, the machine system or process 12 may include control and monitoring equipment for regulating process variables through automation and/or observation.

For example, the illustrated machine system or process 12 may include sensors 24 and actuators 26. The sensors 24 may include any number of devices adapted to provide information regarding process conditions. The actuators 26 may include any number of devices adapted to perform a mechanical action in response to a signal from the automation controller 14. The sensors 24 and actuators 26 may be utilized to operate process equipment. Indeed, they may be utilized within process loops that are monitored and controlled by the automation controller 14. Such a process loop may be activated based on process inputs (e.g., input from a sensor 24) or direct operator input received through human machine interface (HMIs) 28 that provides an interface to the automation controller 14 and may also communicate via the network 16.

As illustrated, the sensors 24 and actuators 26 may communicate with the automation controller(s) 14 in several ways. For example, the sensors 24 and actuators 26 may communicate with the automation controller(s) 14 via an I/O device 18 by way of the network 16 or the sensors 24 and actuators 26 may be directly connected to the automation controller(s) 14. The I/O device 18 may transfer input and output signals between the automation controller(s) 14 and the machine system or process 12. The I/O device 18 serves as an electrical interface to the automation controller(s) 14 and may be located proximate to or remote from the automation controller(s) 14. Additionally, several I/O devices 18 may be used simultaneously to facilitate an appropriate amount of input and output signal capabilities of the industrial automation system 10. Also, the automation controller(s) 14 may include one or more sensors 25 connected directly to the actuators 26 in order to sense the exact signal sent to the actuators 26 before actuation occurs or right after actuation occurs.

The I/O devices 18 may include input modules that receive signals from input devices such as photo-sensors and proximity switches, output modules that use output signals to energize relays or to start motors, and bidirectional I/O modules, such as motion control modules which can direct motion devices and receive position or speed feedback. In some embodiments, the I/O devices 18 may be located in close proximity to a portion of the control system, and away from the remainder of the automation controller(s) 14. In such embodiments, data may be communicated with remote modules over a common communication link, or network 16, wherein modules on the network communicate via a standard communications protocol. Many industrial controllers can communicate via network technologies such as Ethernet (e.g., IEEE802.3, TCP/IP, UDP, EtherNet/IP, and so forth), ControlNet, DeviceNet or other network protocols (Foundation Fieldbus (H1 and Fast Ethernet) Modbus TCP, Profibus) and also communicate to higher level computing systems. Further, the I/O devices 18 may include wireless communication circuitry that may enable wireless communication with portable handheld devices 30, the automation controller(s) 14, the HMI(s) 28, the machine system or process 12, and so forth.

The above described components may be located in the same site, plant, factory, etc. (e.g., "location 1" 32). However, the automation controller(s) 14 and/or HMI(s) 28 may be capable of communicating with external workstations 34 and other location(s) and system(s) 38 over the network 16. The automation controller(s) 14 may also include wireless communication circuitry that enables wireless communication with external devices and/or systems. For example, the automation controller(s) 14 may wirelessly communicate with workstations 34, other components located in "location 2" 36, and/or other locations and system(s) 38. The various workstations 34, locations (32 and 36), and other locations and systems 38 may all communicate with one another and data related to each system may be stored at an enterprise level 40 via network 16.

Additionally, in some embodiments, the automation controller(s)' 14 wireless communication circuitry may enable wirelessly communicating with each component (e.g., HMI(s) 28, I/O devices 18, machine system or process 12, motor drives 20, other applications 22, etc.) located in "location 1" 32 from portable handheld devices 30. For example, a field engineer may possess a portable handheld device 30 connected to a wireless network to which the automation controller(s) 14 is also connected. The field engineer may access an industrial automation system web application served by the automation controller 14 in order to interact with the automation controller's 14 content and functionality. Likewise, the field engineer may use the handheld device 30 to communicate with other components in "location 1" 32, such as the HMI(s) 28, the I/O devices 18, the machine system or process 12, the motor drive(s) 20, and/or other applications 22.

In some embodiments, each component (e.g., the automation controller(s) 14, the HMI(s) 28, the I/O devices 18, the machine system or process 12, the motor drive(s) 20, and/or the other applications 22) may be a serving device as they may run one or more server programs (e.g., industrial automation system web applications or other distributed application) that share their resources and/or services with requesting client device(s). In alternative embodiments, the portable handheld devices 30 may be serving devices as they may run one or more server programs that share their resources with requesting client device(s), such as other portable handheld devices 30 or the HMI(s) 28, the automation controller(s) 14, the motor drive(s) 20, the machine system or process 12, the I/O devices 18, and/or other applications 22.

In some embodiments, the automation controller(s) 14 may be programmable logic controller(s) (PLC) that range in size and capabilities from a PLC including a high performance multi-core microprocessor to a PLC including an ARM processor that utilizes reduced instruction set computing. The latter automation controller 14 may be a portable handheld device 30 such as a smart phone, personal digital assistant (PDA), and so forth, and, as previously discussed, the portable handheld device 30 may be a serving device to which client devices make requests. As such, due to its lack of processing power using a small ARM processor, an industrial automation system web application running on the serving device may perform poorly if it relied on the handheld device 30 for data processing, memory usage, and/or data accumulation and transmission (e.g., network capabilities). Similarly, client device(s) that are making requests to the serving device(s) may be better suited for data processing, accumulation, and/or transmission if the client device(s) include a faster processor, more memory, more bandwidth, etc. Thus, the present disclosure provides beneficial techniques to enhance an industrial automation system web application's performance by shifting the memory usage and/or data processing, accumulation, and/or transmission (e.g., based on network speed) from the serving device(s) to the client device(s), or vice versa, through the use of server-client application pairs, among other things.

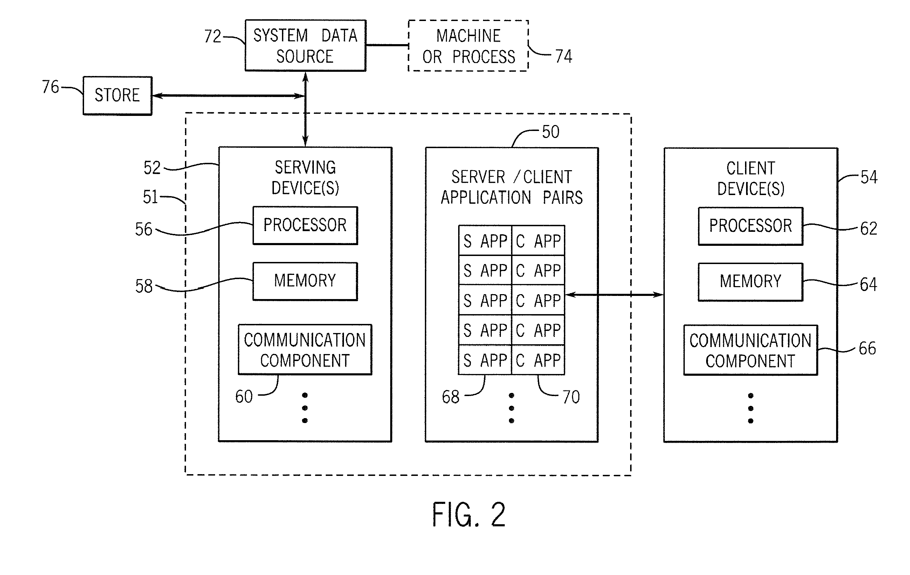

Accordingly, FIG. 2 is a diagrammatical representation of server-client application pairs 50 utilized by an industrial automation system web application with one or more serving devices 52 and one or more client devices 54 in an industrial automation system in accordance with embodiments of the present techniques. As illustrated, in certain embodiments, the server-client application pairs 50 may be stored locally on the serving device 52 (represented by the dashed box 51). However, in other embodiments the serving device 52 may be separated from the server-client application pairs 50, which may be stored on external sources, such as database(s) and/or other devices. In those embodiments, the serving device 52 may access the external sources and load the server-client application pairs 50 as needed depending on the capabilities of the serving device 52 and the client device 54.

The serving device 52 may include a processor 56, a memory 58, and a communication component 60. Likewise, the client device 54 may include a processor 62, a memory 64, and a communication component 66. The communication components (60 and 66) of the serving device and the client device may enable wired or wireless communication or transmission of data between them, such as requests and responses, among others. Further, the serving device's memory 58 may be configured to store a plurality of server-client application pairs 50 that include a server side application 68 and an associated client side application 70. The server-client application pairs 50 may be generated by an industrial automation system web application located on the serving device 52 and run by the processor 56. Alternatively, the server-client application pairs 50 may be generated before the industrial automation system web application is deployed and be bundled as part of the industrial automation system web application package. The industrial automation system web application may be computer instructions stored on a non-transitory, computer-readable medium, such as the serving device's memory 58. The generation and capabilities of the server-client application pairs 50 will be discussed in detail below.

The selection of which server-client application pair 50 may be made by the industrial automation system web application when the application is first started, when a client device 54 makes a request to the serving device 52, and/or when the web application detects that the capabilities of serving device 52 and/or the client device 54 has changed during runtime. Whichever server-client application pair 50 is selected, the serving device 52 may obtain information and content to provide to requesting client device 54 from a system data source 72, which may access information related to a connected machine system or process 74, or from an external data store 76.

In client-server architecture, the server (e.g., serving device 52) may provide access to resources or services across a network to a client (e.g., client device 54) on different hardware. However, in some embodiments, clients 54 and servers 52 may reside on the same hardware. The serving device 52 waits for requests to be initiated by the client device 54 for functions or services. A web server may serve web pages and a shared resource may be a computer program, data, a processor, storage devices, and so forth. As previously discussed, in the case of web applications that are being run on a serving device 52, there are two components that may be utilized: the server side application 68 and the client side application 70. In the present disclosure, server-client application pairs 50 are utilized in order to enhance the performance of an industrial automation system web application based upon the capabilities of the serving device 52 and the client device 54.

A client side application 70 utilized by a web browser may be generally referred to as a "thin client" if the client side application 70 relies heavily on the server side application 68 for data processing, computations, memory usage, and so forth. That is, a "thin client" may not be configured to do any data processing besides content display or other routine tasks. On the other hand, in certain scenarios, a client side application 70 utilized by a web browser may be referred to as a "fat client." In that, the client side application 70 delivered by the serving device 52 does most of the data processing and/or computations on the client device 54 and the client side application 70 may use the client device 54 own memory as opposed to relying on the serving device 52.

Thus, the present techniques relate to identifying the capabilities of serving device 52 and client device 54 making requests to the serving device 52 in order to increase the performance of the industrial automation system web application by selecting a server-client application pair 50 that most closely matches the determined capabilities. For example, if a client device 54 is a powerful desktop computer, then a client side application 70 that performs more processing, computations, uses its own memory, and so forth (e.g., a "fat client") may be selected. In such a scenario, a server side application 68 associated with the selected "fat client" may perform very little processing and minimally use the memory of the serving device 52. In contrast, if a client device 54 is a small cell phone with limited resources such as memory (RAM), CPU speed, and non-volatile memory storage, then a client side application 70 that performs less processing and uses less memory (e.g., a "thin client") may be selected. In such a scenario, a server side application 68 associated with the selected "thin client" may perform most of the data processing, computations, and use the serving device's memory instead of the client device's memory.

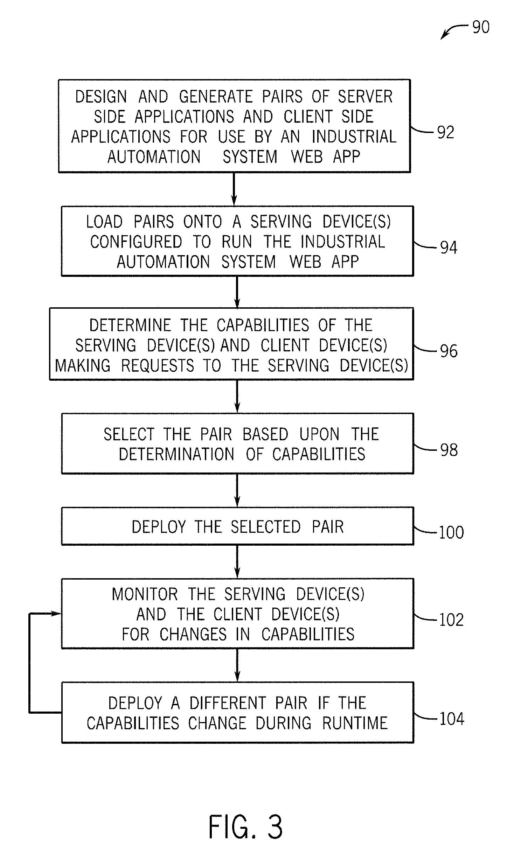

FIG. 3 is a block diagram of exemplary logic of a process 90 for generating, loading, selecting, and deploying server-client application pairs 50 using an industrial automation web application in accordance with embodiments of the present techniques. The process 90 may begin with the industrial automation system web application designing and generating pairs of server side applications 68 and client side applications 70 for use by the industrial automation system web application (block 92). The server side application 68 may be written in any suitable web application programming language including, but not limited to, Active Server Pages, ColdFusion, Java, Node.js, Perl, PHP, Python, Ruby, .Net, and so forth. Similarly, the client side application 70 may be written in any suitable web application programming language including, but not limited to, Ajax, JavaScript, jQuery, HTML5, and so forth.

The server-client application pairs 50 may range in capabilities from the server side application 68 having more capabilities than the associated client side application 70 to the server side application 68 having fewer capabilities than the associated client side application 70. The capabilities of the server-client application pairs 50 may include different functionalities, such as formatting, processing, assembly of pages, logic, accumulation and transmission of data (e.g., based on the speed of the network), among others. For example, on one extreme side of the range the server side application 68 may perform as much of the processing as possible and the associated client side application 70 may perform as little processing as possible. On the other extreme end of the range the server side application 68 may perform as little processing as possible and the associated client side application 70 may perform as much processing as possible. As previously mentioned, there may be several server-client application pairs 50 with varying capabilities generated that are in between the two extremes, as well.

In block 94, the plurality of server-client application pairs 50 may be loaded onto the serving device 52 that are configured to run the industrial automation system web application. As previously discussed, the server-client application pairs 50 may be stored in the serving device's memory 58, which may include RAM, non-volatile storage (e.g., disk drives and/or flash memory), and so forth. In some embodiments, the server-client application pairs 50 may be accessed by the web application and loaded on the serving device 52 prior to receiving any requests from client device 54. In such embodiments, when a request from the client device 54 is made to the serving device 52 the industrial automation system web application may determine the capabilities of the serving device(s) 52 and the client device 54 making the requests (block 96). The capabilities of the serving device 52 and the client device 54 analyzed by the industrial automation system web application may include CPU availability and usage, memory availability and usage, network bandwidth and usage, among others.

Once the capabilities of the serving device 52 and the client device 54 making requests to the serving device 52 are determined, the industrial automation system web application may select a server-client application pair 50 to utilize based on the determined capabilities (block 98). For example, if the industrial automation system web application determines that the serving device 52 is utilizing a small ARM processor, then the web application may select a server-client application pair 50 with a server side application 68 that performs little processing and a client side application 70 that performs more processing. In that way, the client side application 70 may utilize the client device's processor, which may be more capable of intensive processing. In addition, if both the serving device 52 and client device 54 utilize small processors, then a server-client application pair 50 may be selected that balances the processing between the serving device 52 and the client device 54. In another embodiment, if the serving device 52 are a part of a big server farm with a large amount of processing power, then a server-client application pair 50 may be selected that includes a server side application 68 that performs most of the processing and uses the serving device's 52 memory, and a client side application 70 may be selected that performs as little processing as possible. In yet another embodiment, if the industrial automation system web application determines that the network that the serving device 52 and the client device 54 are communicating over is slow, the web application may select a server-client application pair 50 tailored for the slow network and the server side application 68 and/or the client side application 70 may accumulate data before transmission more so than it would if the network were faster.

In block 100, after the appropriate client-server application pair 50 is selected by the industrial automation system web application, the server side application 68 may be deployed on the serving device 52 and the client side application 70 may be delivered to the client device 54 for use by their browsers. As a result, the industrial automation system web application's performance may be increased because a server-client application pair 50 been chosen and deployed that is tailored to the capabilities of the serving device 52, the client device 54, and the network. Thus, the disclosed techniques may leverage the known capabilities of the serving device 52 and client device to enhance the performance of the industrial automation system web application by enabling a client device 54 to send a request to a serving device 52 and the serving device 52 to process the request and return a response faster.

However, the capabilities (e.g., resources (CPU, memory, bandwidth, etc.)) of the serving device(s) 52 and the client device(s) 54 may change during runtime, which may affect the performance of the industrial automation system web application. Therefore, in block 102, the process 90 monitors the serving device 52 and the client device 54 making requests to the serving device(s) 52 for changes in capabilities (e.g., resources). For example, the industrial automation system web application may monitor the CPU or memory usage, network speed, and so forth, on the serving device 52 and the client device 54 and detect any increases and/or decreases.

In block 104, in certain embodiments, the industrial automation system web application may select and deploy a different server-client application pair 50 based on the detected change(s) seamlessly during runtime. For example, if the serving device's CPU usage increased drastically and performance is slowing down, then the industrial automation system web application may select and deploy a different server-client application pair 50 that includes a server side application 68 that performs less processing on the serving device 52. In this way, the serving device 52 CPU usage may be reduced and the CPU processing may be shifted to the client device 54 through the use of an associated client side application 70 that performs more processing than the server side application 68.

In addition, in certain embodiments, the server-client application pair 50 may be deployed without shutting down the industrial automation system web application because of the programming languages utilized to develop the server-client application pairs 50. For example, the client side application 70 may be written in HTML5 and JavaScript, as well as any other suitable programming language, which may enable scaling the client side application's 70 capabilities (e.g., functionality, data processing, formatting, data accumulation and transmission, etc.) up and down dynamically based on the resources available on the client device 54. As illustrated, the process 90 may return to block 102 to monitor the serving device(s) 52 and the client device 54 for changes in capabilities after the newly selected server-client application pair 50 is deployed.

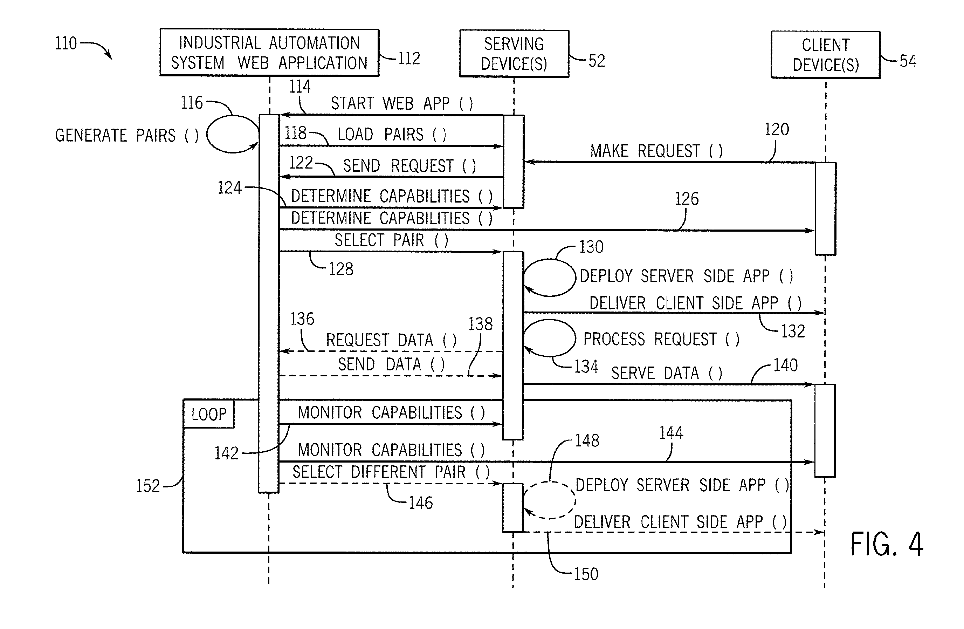

The process 90 described above may be furthered explained with reference to sequence diagram 110 in FIG. 4. The sequence diagram 110 illustrates exemplary logic for generating, loading, selecting, and deploying server-client application pairs 50 using an industrial automation web application in accordance with embodiments of the present techniques. The sequence diagram 110 includes three actors: an industrial automation system web application 112, serving device 52, and client device 54. As previously discussed, the industrial automation system web application 112 may be deployed and running on the serving device 52. Thus, the serving device 52 may start the industrial automation system web application 112 (line 114). Once started, the industrial automation system web application 112 may perform one or more methods utilizing computer instructions stored on a non-transitory, computer-readable medium to access the generated server-client application pairs 50 with varying capabilities (line 116). The industrial automation system web application 112 may load the server-client application pairs 50 on the serving device's memory 58 (line 118). In alternate embodiments, the industrial automation system web application 112 may load the server-client application pairs 50 to an external source.

The client device 54 may make a request to the serving device 52 (line 120) and the serving device 52 may send the request to the industrial automation system web application 112 (line 122). At this point, the industrial automation system web application 112 may determine the capabilities (e.g., resources (CPU, RAM, network, etc.)) of the serving device 52 (line 124) and the client device 54 making requests to the serving device 52 (line 126). The industrial automation system web application 112 may select a server-client application pair 50 closely tailored to the determined capabilities of the serving device 52 and the client device 54 (line 128). At line 130, the serving device 52 may deploy the selected server side application 68 and, at line 132, the serving device 52 may deliver the associated client side application 70 to the requesting client device 54. The serving device 52 may utilize the deployed server side application 68 to process the request made by the client device 54 (line 134). This may entail requesting data from the industrial automation system web application 112 (line 136), the industrial automation system web application 112 performing some data processing (not shown), and the web application 112 sending the data to the serving device 52 (line 138). The serving device 52 will serve the data to the requesting client device 54 as a response (line 140).

As discussed above, the industrial automation system web application 112 may monitor the capabilities (e.g., resources) of the serving device 52 (line 142) and the client device 54 (line 144) during runtime to determine whether any changes occur. For example, the memory usage on the serving device 52 may spike and the performance of the industrial automation system web application 112 may be hindered. In such a scenario, the industrial automation system web application 112 may select a different server-client application pair 50 (line 146) that includes a server side application 68 that uses less memory on the serving device 52. The serving device 52 may dynamically deploy the different server side application 68 at line 148 and deliver the client side application 70 to the client device 54 at line 150. As a result, the memory usage on the serving device 52 may be reduced during runtime and the performance of the industrial automation system web application 112 may be enhanced. As illustrated, loop 152 depicts that the industrial automation system web application 112 may continuously monitor the capabilities of the serving device 52 and the client device 54 (lines 142 and 144) and optionally select different server-client application pairs 50 (line 146) based on detected changes, which may then be seamlessly deployed on the serving device 52 (line 148) and delivered to the client device 54 (line 150).

While only certain features of the invention have been illustrated and described herein, many modifications and changes will occur to those skilled in the art. It is, therefore, to be understood that the appended claims are intended to cover all such modifications and changes as fall within the true spirit of the invention.

### The following is a list of further preferred embodiments of the invention:

Embodiment 1. An industrial automation system, comprising:
   a serving device comprising a processor, a memory, and a communication component wherein the serving device stores in the memory a plurality of pairs of server side applications and client side applications accessed by the web application, the pairs of server side applications and client side applications permitting, together, performance of an industrial automation task; and
   a web application that is, in operation, run via the processor on the serving device, and is configured to, when a request is made from a client device via the communication component and while the web application is running, determine capabilities of the serving device and of the client device, select a server side application to deploy on the serving device and client side application to deliver to the client device from the pairs of stored applications based upon the determined capabilities of the serving device and the client device.
Embodiment 2. The system of embodiment 1, comprising monitoring, via the web application, the capabilities of the serving device and the client device during operation after selection of the server side application and the client side application pair.
Embodiment 3. The system of embodiment 2, comprising detecting a change in the capabilities of the serving device and the client device and selecting a different server side application and/or a different client side application based on the change.
Embodiment 4. The system of embodiment 3, comprising deploying the different server side application on the serving device and/or delivering the different client side application to the one or more client device.
Embodiment 5. The system of embodiment 1, wherein the capabilities of the serving device and the client device comprise at least one of CPU availability and/or usage, memory availability and/or usage, and network bandwidth and/or usage.
Embodiment 6. The system of embodiment 1, wherein the pairs of server side applications and client side applications are configured so that the capabilities of the pairs of server side applications and client side applications are different, and the pairs create a range from the server side application having relatively more capabilities when the associated client side application has relatively less capabilities, to the server side application having relatively less capabilities when the associated client side application has relatively more capabilities.
Embodiment 7. The system of embodiment 6, wherein the capabilities of the server side applications and client side applications comprise functionality, processing, formatting, assembly of pages, logic, accumulation of data, and/or transmission of data.
Embodiment 8. The industrial automation system of embodiment 1, wherein the plurality of pairs of server side applications and client side applications are accessed by the web application and stored on the serving device before any requests are made from the client device.
Embodiment 9. The system of embodiment 1, wherein the web application is configured to deliver content and functionalities to the client device that makes requests to the serving device.
Embodiment 10. A non-transitory computer-readable medium storing computer instructions, the computer instructions configured to:
   access a plurality of pairs of server side applications and client side applications for use in an industrial automation system, wherein the pairs are configured so that the capabilities of the server side applications and client side applications are different and the pairs create a range from the server side application having relatively more capabilities when the associated client side application has relatively less capabilities, to the server side application having relatively less capabilities when the associated client side application has relatively more capabilities;
   load the pairs to a serving device;
   determine the capabilities of the serving device and client device that makes requests to the serving device;
   select the pair of server side application to deploy and client side application to deliver based upon the determination of capabilities of the serving device and the client device; and
   deploy the selected pair, wherein the selected server side application is deployed on the serving device and the associated client side application is delivered to the client device.
Embodiment 11. The computer-readable medium storing non-transitory computer instructions of embodiment 10, wherein the computer instructions are configured to monitor the serving device and the client device for changes in capabilities during runtime.
Embodiment 12. The computer-readable medium storing non-transitory computer instructions of embodiment 11, wherein the computer instructions are configured to select a different pair to deploy based upon detected changes in capabilities of the serving device or the client device.
Embodiment 13. The computer-readable medium storing non-transitory computer instructions of embodiment 12, wherein the computer instructions are configured to deploy the selected server side application on the serving device and to deliver the client side application to the client device during runtime.
Embodiment 14. The computer-readable medium storing non-transitory computer instructions of embodiment 10, wherein the capabilities of the server side applications and client side applications comprise functionality, processing, formatting, assembly of pages, logic, accumulation of data, and/or transmission of data.
Embodiment 15. The computer-readable medium storing non-transitory computer instructions of embodiment 10, wherein the capabilities of the serving device and the client device comprise at least one of CPU availability and/or usage, memory availability and/or usage, and network bandwidth and/or usage.
Embodiment 16. The computer-readable medium storing non-transitory computer instructions of embodiment 10, wherein the computer instructions are configured to process requests from the client device via the deployed server side application and provide data to the client device via the deployed client side application.
Embodiment 17. A method for an industrial automation system, comprising:
   accessing, via an industrial automation system web application, a plurality of pairs of server side applications and client side applications for use in the industrial automation system web application, wherein the pairs create a range from the server side application having relatively more capabilities when the associated client side application has relatively less capabilities, to the server side application having relatively less capabilities when the associated client side application has relatively more capabilities;
   loading the pairs to a serving device that is configured to run the industrial automation system web application;
   determining, via the industrial automation system web application, the capabilities of the serving device and a client device that make requests to the serving device;
   selecting, via the industrial automation system web application, the pair of server side application and client side application based upon the determination of capabilities of the serving device and the client device; and
   deploying the selected pair, wherein the server side application is deployed on the serving device and the client side application is delivered to the client device.
Embodiment 18. The method of embodiment 17, comprising monitoring, via the industrial automation system web application, the serving device and the client device for changes in capabilities.
Embodiment 19. The method of embodiment 17, comprising selecting, via the industrial automation system web application, a different pair based upon a detected change in capabilities of the serving device or the client device and deploying the different pair during runtime.
Embodiment 20. The method of embodiment 17, wherein the capabilities of the server side applications and client side applications comprise functionality, processing, formatting, assembly of pages, logic, accumulation of data, and/or transmission of data, and the capabilities of the serving device and the client device comprise at least one of CPU availability and/or usage, memory availability and/or usage, and network bandwidth and/or usage.

## Claims

1. An industrial automation system, comprising:
a serving device comprising a processor, a memory, and a communication component wherein the serving device stores in the memory a plurality of pairs of server side applications and client side applications accessed by the web application, the pairs of server side applications and client side applications permitting, together, performance of an industrial automation task; and
a web application that is, in operation, run via the processor on the serving device, and is configured to, when a request is made from a client device via the communication component and while the web application is running, determine capabilities of the serving device and of the client device, select a server side application to deploy on the serving device and client side application to deliver to the client device from the pairs of stored applications based upon the determined capabilities of the serving device and the client device.

2. The system of claim 1, comprising monitoring, via the web application, the capabilities of the serving device and the client device during operation after selection of the server side application and the client side application pair.

3. The system of claim 2, comprising detecting a change in the capabilities of the serving device and the client device and selecting a different server side application and/or a different client side application based on the change.

4. The system of claim 3, comprising deploying the different server side application on the serving device and/or delivering the different client side application to the one or more client device.

5. The system of any one of claims 1 to 4, wherein the capabilities of the serving device and the client device comprise at least one of CPU availability and/or usage, memory availability and/or usage, and network bandwidth and/or usage.

6. The system of any one of claims 1 to 5, wherein the pairs of server side applications and client side applications are configured so that the capabilities of the pairs of server side applications and client side applications are different, and the pairs create a range from the server side application having relatively more capabilities when the associated client side application has relatively less capabilities, to the server side application having relatively less capabilities when the associated client side application has relatively more capabilities.

7. The system of claim 6, wherein the capabilities of the server side applications and client side applications comprise functionality, processing, formatting, assembly of pages, logic, accumulation of data, and/or transmission of data.

8. The industrial automation system of any one of claims 1 to 7, wherein the plurality of pairs of server side applications and client side applications are accessed by the web application and stored on the serving device before any requests are made from the client device.

9. The system of any one of claims 1 to 8, wherein the web application is configured to deliver content and functionalities to the client device that makes requests to the serving device.

10. A non-transitory computer-readable medium storing computer instructions, the computer instructions configured to:
access a plurality of pairs of server side applications and client side applications for use in an industrial automation system, wherein the pairs are configured so that the capabilities of the server side applications and client side applications are different and the pairs create a range from the server side application having relatively more capabilities when the associated client side application has relatively less capabilities, to the server side application having relatively less capabilities when the associated client side application has relatively more capabilities;
load the pairs to a serving device;
determine the capabilities of the serving device and client device that makes requests to the serving device;
select the pair of server side application to deploy and client side application to deliver based upon the determination of capabilities of the serving device and the client device; and
deploy the selected pair, wherein the selected server side application is deployed on the serving device and the associated client side application is delivered to the client device.

11. The computer-readable medium storing non-transitory computer instructions of claim 10, wherein the computer instructions are configured to monitor the serving device and the client device for changes in capabilities during runtime; or
wherein the computer instructions are configured to select a different pair to deploy based upon detected changes in capabilities of the serving device or the client device.

12. The computer-readable medium storing non-transitory computer instructions of claim 11, wherein the computer instructions are configured to deploy the selected server side application on the serving device and to deliver the client side application to the client device during runtime.

13. The computer-readable medium storing non-transitory computer instructions of any one of claims 10 to 12, wherein the capabilities of the server side applications and client side applications comprise functionality, processing, formatting, assembly of pages, logic, accumulation of data, and/or transmission of data; or
wherein the capabilities of the serving device and the client device comprise at least one of CPU availability and/or usage, memory availability and/or usage, and network bandwidth and/or usage; or
wherein the computer instructions are configured to process requests from the client device via the deployed server side application and provide data to the client device via the deployed client side application.

14. A method for an industrial automation system, comprising:
accessing, via an industrial automation system web application, a plurality of pairs of server side applications and client side applications for use in the industrial automation system web application, wherein the pairs create a range from the server side application having relatively more capabilities when the associated client side application has relatively less capabilities, to the server side application having relatively less capabilities when the associated client side application has relatively more capabilities;
loading the pairs to a serving device that is configured to run the industrial automation system web application;
determining, via the industrial automation system web application, the capabilities of the serving device and a client device that make requests to the serving device;
selecting, via the industrial automation system web application, the pair of server side application and client side application based upon the determination of capabilities of the serving device and the client device; and
deploying the selected pair, wherein the server side application is deployed on the serving device and the client side application is delivered to the client device.

15. The method of claim 14, comprising monitoring, via the industrial automation system web application, the serving device and the client device for changes in capabilities; or
comprising selecting, via the industrial automation system web application, a different pair based upon a detected change in capabilities of the serving device or the client device and deploying the different pair during runtime; or
wherein the capabilities of the server side applications and client side applications comprise functionality, processing, formatting, assembly of pages, logic, accumulation of data, and/or transmission of data, and the capabilities of the serving device and the client device comprise at least one of CPU availability and/or usage, memory availability and/or usage, and network bandwidth and/or usage.
